# EUROPEAN PATENT APPLICATION

(11) **EP 4 553 651 A1**
(43) Date of publication of application: **14.05.2025**
(21) Application number: 23859118.4
(22) Date of filing: 10.08.2023
(51) Int. Cl.: G06F 9/451

(54) **USER INTERFACE DISPLAY METHOD AND RELATED APPARATUS**

(30) Priority: 31.08.2022 CN 202211055007
(71) Applicant: Huawei Technologies Co., Ltd., Shenzhen, Guangdong 518129 (CN)
(72) Inventor: CHEN, Benzhi, Shenzhen, Guangdong 518129 (CN); LAN, Shouren, Shenzhen, Guangdong 518129 (CN); YANG, Jiandong, Shenzhen, Guangdong 518129 (CN); YU, Zhiqiang, Shenzhen, Guangdong 518129 (CN)
(74) Representative: MERH-IP Matias Erny Reichl Hoffmann Patentanwälte PartG mbB
(86) International application number: PCT/CN2023/112335
(87) International publication number: WO 2024/046084

(57) **Abstract**

A user interface display method and a related apparatus are provided, where the user interface display method is applied to an electronic device. The method includes: generating a first drawing instruction of a native view and a second drawing instruction of a complex view in response to an operation of starting a user interface UI of an application by a user, where the UI includes the native view and the complex view, the native view comes from an application UI development framework of an operating system of the electronic device, and the complex view is not a view from the application UI development framework, generating a target drawing instruction based on the first drawing instruction and the second drawing instruction, where the target drawing instruction is used to draw the native view and the complex view at a same layer; and displaying the UI based on the target drawing instruction. The first drawing instruction and the second drawing instruction are synthesized to obtain the target drawing instruction, and the native view and the complex view are drawn at the same layer based on the target drawing instruction. This can improve display performance and resolve problems of pop-up box blocking and asynchronous animation.

## Description

This application claims priority to Chinese Patent Application No. 202211055007.4, filed with the China National Intellectual Property Administration on August 31, 2022 and entitled "USER INTERFACE DISPLAY METHOD AND RELATED APPARATUS", which is incorporated herein by reference in its entirety.

### TECHNICAL FIELD

This application relates to the field of terminal technologies, and in particular, to a user interface display method and a related apparatus.

### BACKGROUND

Different cross-platform application user interface (user interface, UI) development frameworks expose some complex views to developers, to reduce difficulty in UI application development by the developers and attract more UI application developers to participate in cross-platform ecosystem construction.

Application UI development frameworks of some platforms provide a solution of synthesizing a native view of the application UI development framework of the platform with an embedded complex view for display. However, in a currently known user interface display solution, the embedded complex view needs to be rendered a plurality of times, resulting in a problem of low synthesis display performance.

Therefore, a user interface display method and a related apparatus need to be urgently provided to improve display performance.

### SUMMARY

This application provides a user interface display method and a related apparatus, to improve display performance.

According to a first aspect, this application provides a user interface display method. The method may be performed by an electronic device, or the method may be performed by a component (for example, a chip or a chip system) configured in an electronic device, or may be implemented by a logical module or software that can implement all or some functions of an electronic device. This is not limited in this application.

For example, the method includes: generating a first drawing instruction of a native view and a second drawing instruction of a complex view in response to an operation of starting a user interface UI of an application by a user, where the UI includes the native view and the complex view, the native view comes from an application UI development framework of an operating system of the electronic device, and the complex view is not a view from the application UI development framework of the operating system of the electronic device; generating a target drawing instruction based on the first drawing instruction and the second drawing instruction, where the target drawing instruction is used to draw the native view and the complex view at a same layer; and displaying the UI based on the target drawing instruction.

Based on the foregoing technical solution, the drawing instruction of the complex view and the drawing instruction of the native view are synthesized to obtain the target drawing instruction, the native view and the complex view may be drawn at the same layer based on the target drawing instruction, and the complex view needs to be rendered together with the native view only once, so that problems of high power consumption and low display performance caused by a plurality of times of rendering can be effectively avoided, for example, power consumption is reduced, and a frame rate is optimized. In addition, because the native view and the complex view are drawn at the same layer, problems of pop-up box blocking and asynchronous animation can be resolved, and a transition animation of the user interface can be supported.

Optionally, before the target drawing instruction is generated, the first drawing instruction and the second drawing instruction are stored in a same drawing instruction queue.

With reference to the first aspect, in some possible implementations, the method further includes: registering a render callback with a graphics processing unit (graphics processing unit, GPU) render (render) thread of the UI development framework, where the render callback is used to obtain the second drawing instruction; and placing, based on the render callback, the second drawing instruction in a target drawing instruction queue when the second drawing instruction is detected, where the target drawing instruction queue is a queue used to store the first drawing instruction.

The drawing instruction of the complex view does not require an independent offline buffer, so that memory space is saved. In addition, a plurality of copy (copy) or upload (upload) operations do not need to be performed between a central processing unit (central processing unit, CPU) and a GPU, saving time and improving display performance.

Optionally, after the displaying the UI based on the target drawing instruction, the method further includes: generating a third drawing instruction in response to an operation of the user on the UI, where the third drawing instruction is a drawing instruction obtained by updating the second drawing instruction; generating an updated target drawing instruction based on the first drawing instruction and the third drawing instruction; and displaying the UI based on the updated target drawing instruction.

Optionally, after the displaying the UI based on the target drawing instruction, the method further includes: generating a fourth drawing instruction in response to an operation of the user on the UI, where the fourth drawing instruction is a drawing instruction obtained by updating the first drawing instruction; generating an updated target drawing instruction based on the second drawing instruction and the fourth drawing instruction; and displaying the UI based on the updated target drawing instruction.

Optionally, after the displaying the UI based on the target drawing instruction, the method further includes: obtaining a third drawing instruction and a fourth drawing instruction in response to an operation of the user on the UI, where the third drawing instruction is a drawing instruction obtained by updating the second drawing instruction, and the fourth drawing instruction is a drawing instruction obtained by updating the first drawing instruction; generating an updated target drawing instruction based on the third drawing instruction and the fourth drawing instruction; and displaying the UI based on the updated target drawing instruction.

Optionally, the complex view has an independent life cycle, an independent routing management mechanism, an independent event processing mechanism, an independent UI open framework, and the like.

Optionally, the displaying the UI based on the target drawing instruction includes: generating texture data of the UI based on the target drawing instruction; and displaying the UI based on the texture data.

According to a second aspect, this application provides an electronic device. The electronic device may be configured to implement the method according to any one of the first aspect or the possible implementations of the first aspect. The electronic device includes a corresponding module configured to perform the foregoing method. The module included in the electronic device may be implemented by using software and/or hardware.

According to a third aspect, this application provides an electronic device. The electronic device includes at least one processor and at least one communication interface. The processor is coupled to the communication interface, and may be configured to execute a computer program, to implement the user interface display method according to any one of the first aspect or the possible implementations of the first aspect.

Optionally, the electronic device further includes a memory, and the processor is coupled to the memory.

According to a fourth aspect, this application provides a chip system. The chip system includes at least one processor, configured to support implementation of a function according to any one of the first aspect or the possible implementations of the first aspect, for example, processing data in the foregoing method.

In a possible design, the chip system further includes a memory. The memory is configured to store program instructions and data. The memory is located inside the processor or outside the processor.

The chip system may include a chip, or may include a chip and another discrete component.

According to a fifth aspect, a computer-readable storage medium is provided, where the computer storage medium stores a computer program (which may also be referred to as code or instructions), and when the computer program is run by a computer, the method according to any one of the first aspect or the possible implementations of the first aspect is performed.

According to a sixth aspect, a computer program product is provided. The computer program product includes a computer program (which may also be referred to as code or instructions), and when the computer program is run, the method according to any one of the first aspect or the possible implementations of the first aspect is performed.

It should be understood that the second aspect to the sixth aspect of this application correspond to the technical solutions of the first aspect of this application, and beneficial effects achieved by the aspects and the corresponding feasible implementations are similar. Details are not described again.

### BRIEF DESCRIPTION OF DRAWINGS

FIG. 1 is a diagram of a structure of an electronic device applicable to a user interface display method according to an embodiment of this application;
FIG. 2 is a block diagram of a software structure of an electronic device applicable to a user interface display method according to an embodiment of this application;
FIG. 3 is a diagram of comparison between a procedure of a known user interface display method and a procedure of a user interface display method according to this application;
FIG. 4 is a schematic flowchart of a user interface display method according to an embodiment of this application; and
FIG. 5 is another schematic flowchart of a user interface display method according to an embodiment of this application.

### DESCRIPTION OF EMBODIMENTS

The following describes technical solutions of this application with reference to accompanying drawings.

To clearly describe the technical solutions in embodiments of this application, the following descriptions are first provided.

First, in embodiments of this application, words such as "first" and "second" are used to distinguish between same items or similar items having basically same functions and effects. For example, a first drawing instruction, a second drawing instruction, a third drawing instruction, and a fourth drawing instruction are merely used to distinguish between different drawing instructions, and a sequence of the drawing instructions is not limited. A person skilled in the art may understand that the words such as "first" and "second" do not limit a quantity and a location, and the words such as "first" and "second" are not limited to be definitely different.

Second, in embodiments of this application, the terms "include", "contain", and any other variant thereof are intended to cover a non-exclusive inclusion. For example, an apparatus, system, product, or device that includes a series of assemblies, modules, or units is not necessarily limited to those assemblies, modules, or units that are clearly listed, but may include other assemblies, modules, or units that are not explicitly listed or are inherent to such an apparatus, system, product, or device.

Third, in embodiments of this application, "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context.

For ease of understanding, the following briefly describes terms used in this application.
1. A platform (platform) may also be referred to as a host platform, for example, an operating system.

The platform in embodiments of this application may be, for example, an operating system like an Android operating system (Android operating system, Android OS), a Harmony operating system (Harmony OS), OpenHarmony, an iOS, a Windows operating system (Windows OS), or a lightweight operating system (like LiteOS). This is not limited in embodiments of this application.

2. A cross-platform application UI development framework is a tool package for building an application UI, and can be used to build high-quality native UIs on different platforms.

For example, Flutter is an open-source tool package for building an application UI. Flutter has great advantages in unifying function logic and interface performance of each platform and improving development efficiency. Currently, Flutter is widely used in applications. However, Flutter is more oriented to construction of upper-layer functions of applications. During daily development, some bottom-layer capabilities of a platform are often used. Therefore, Flutter needs to communicate with the platform. For another example, Vant is a lightweight and reliable mobile component library, and may also be used as an example of the cross-platform application UI development framework.

3. A complex view is a view that has an independent life cycle, an independent routing management mechanism, an independent event processing mechanism, an independent UI development framework, and the like.

It should be noted that a native view in embodiments of this application comes from an application UI development framework of an operating system of an electronic device, and the complex view is not a view of the application UI development framework from the operating system of the electronic device. The native view is generally a simple view. In other words, the native view does not have an independent life cycle, an independent routing management mechanism, an independent event processing mechanism, or the like.

4. A process is an activity performed regarding a data set by a program in a computer, is a base unit for performing resource allocation and scheduling by the system, and is a structural basis of an operating system. In an early process-oriented computer architecture, the process is a basic execution entity of a program. In a modem thread-oriented computer architecture, the process is a container for threads. The program is a description of an instruction, data, and an organizational form thereof. The process is a program entity.

5. A thread is a minimum unit that an operating system can compute and schedule. The thread is included in a process and is an actual operating unit of the process. One thread is a single sequential control flow in a process. A plurality of threads can be concurrently executed in one process, and each thread executes different tasks in parallel.

6. A UI thread is a main thread of an application (application, APP). The UI thread distributes click and drawing events to controls on an application interface. By interacting with UI components, the UI thread can obtain various resources required for drawing the application interface. Under the triggering of a vertical synchronization (vertical synchronization, VSync) signal of the application, a choreographer of a view framework initiates drawing of each frame, including measurement (measure), layout (layout), and drawing (draw) a view tree. Finally, a render task is sent to a render thread (render thread) for queue processing.

7. Render thread: To reduce load of a UI thread, the UI thread creates a render proxy (render proxy) object to hold the render thread and creates a canvas context (canvas context) to implement a context of GPU-based drawing operations. Render pipelines such as a graphics library (Open Graphic Library, OpenGL), SkiaGL and SkiaVulkan can be exposed to different platforms. After initialization is complete, a drawing callback is registered in each frame drawing, the UI thread is notified of a drawing result, a render node (render node) is updated and destroyed, and a computer language (GL) instruction is delivered. Finally, the GPU sends an image buffer to an image synthesis service (surface flinger). The image synthesis service receives the image buffer and prepares for synthesis and sending for display. The image synthesis service may receive an image buffer of an application process, synthesize image data, and then send the image data to a display for hardware superposition.

8. View, render node, and drawing instruction: For an APP, each drawing target corresponds to a view. A complete view tree is finally obtained through view integration and combination, and the view tree forms a user interface of a current application. In an Android hardware acceleration framework, a render node tree (render node tree) is constructed corresponding to the view tree. A render node of a render thread corresponds to a view of a UI thread. The view is abstracted as a render node, and drawing in the view is abstracted as drawing instructions. For example, a DrawLine operation in a view is abstracted as a DrawLineOp during construction and a DrawBitmap operation in a view is abstracted as a DrawBitmapOp in a construction process. Drawing of each sub-view is abstracted as a DrawRenderNodeOp, and each drawing instruction has a corresponding OpenGL drawing command and data required for drawing. The render node tree completely records a drawing instruction converted from a drawing operation of a view, and finally converts the drawing instruction into an OpenGL instruction encapsulated by a graphics library (for example, OpenGL) to complete true GPU drawing.

The render node may be understood as further encapsulation of a drawing instruction and some display attributes of a view. In code logic, a view corresponds to a render node, and the render node manages a corresponding drawing instruction. Each render node tree may include a root render node (root render node), and drawing instructions of all views in the view tree may be found via the root render node. The render node tree runs on the render thread, and all GL instructions required for GPU drawing are executed on the render thread. The render thread stores all information about a render frame in the render node.

The drawing instruction stored in the render node is equivalent to an "intermediate language" between a drawing operation of a view and a GL instruction, and records all information required for drawing the view. Subsequently, content drawing can be completed only through replay (replay). In this way, if the view is not changed or only a part of the view is changed, the drawing instruction may be reused or modified, so that invoking some upper-layer code is avoided and processing efficiency is improved.

9. A webview (Webview) is a native control of a client application for displaying a web page, and is generally provided by the client application. The webview can be understood as an embedded browser embedded in the client application.

The method provided in embodiments of this application may be applied to an electronic device like a mobile phone, a tablet computer, a smartwatch, a wearable device, an in-vehicle device, an augmented reality (augmented reality, AR)/virtual reality (virtual reality, VR) device, a notebook computer, a personal computer (personal computer, PC), an ultra-mobile personal computer (ultra-mobile personal computer, UMPC), a netbook, a personal digital assistant (personal digital assistant, PDA), and a distributed device. A specific type of the electronic device is not limited in embodiments of this application.

In addition, the method in embodiments of this application may support operating environments such as Android OS, Harmony OS, OpenHarmony, iOS, Windows OS, and LiteOS. This is not limited in embodiments of this application.

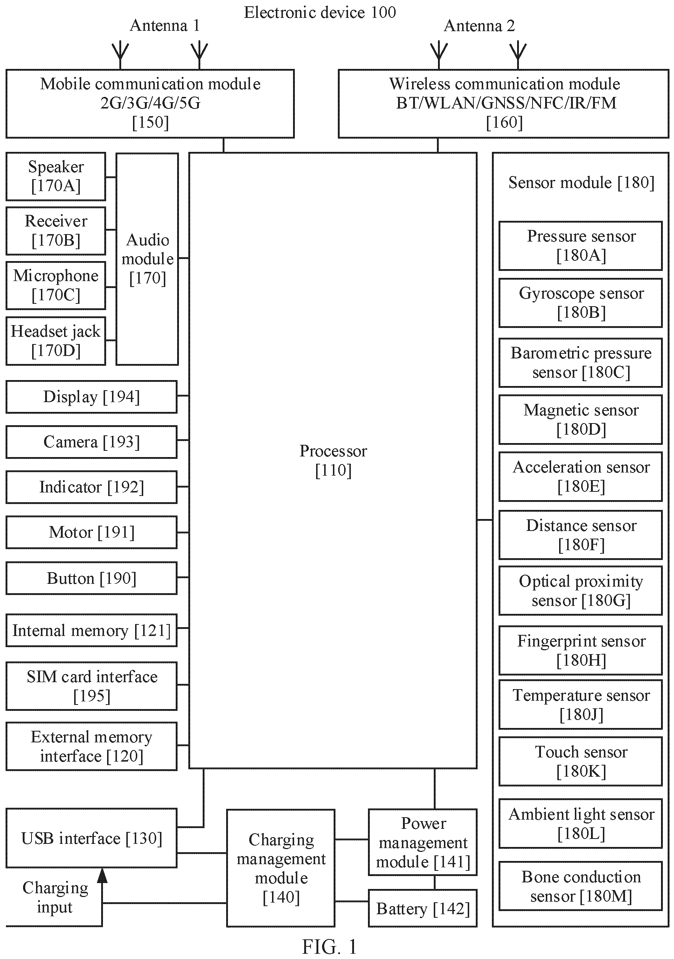

For example, FIG. 1 is a diagram of a structure of an electronic device 100. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180F, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include one or more of an application processor (application processor, AP), a modem processor, a GPU, an image signal processor (image signal processor, ISP), a controller, a memory, a video codec, a digital signal processor (digital signal processor, DSP), a baseband processor, a neural-network processing unit (neural-network processing unit, NPU), and the like. Different processing units may be independent components, or may be integrated into one or more processors.

The application processor outputs a sound signal through the audio module 170 (for example, the speaker 170A), or displays an image or a video on the display 194.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The processor 110 may perform different operations by executing the instructions, to implement different functions. For example, the instructions may be instructions pre-stored in the memory before the device is delivered from a factory, or may be instructions read from a new APP after a user installs the APP in a use process. This is not limited in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The USB interface 130 is an interface that conforms to a USB standard specification, and may be specifically a mini USB interface, a micro USB interface, a USB Type-C interface, or the like. The USB interface 130 may be configured to be connected to a charger to charge the electronic device 100, or may be configured to transmit data between the electronic device 100 and a peripheral device, or may be configured to connect to a headset for playing audio through the headset. The interface may be further configured to connect to another electronic device like an AR device. It may be understood that an interface connection relationship between modules illustrated in this application is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device 100 through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth, a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a fifth generation (5th generation, 5G) communication system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194, which may also be referred to as a screen, may be configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED (Mini LED), a micro-LED (Micro LED), a micro-OLED (Micro-OLED), a quantum dot light-emitting diode (quantum dot light emitting diodes, QLED), or the like. In some embodiments, the electronic device 100 may include one or more displays 194.

It should be understood that the display 194 may further include more components, for example, a backlight board or a drive circuit. The backlight board may be configured to provide a light source, and the display panel emits light based on the light source provided by the backlight board. The drive circuit may be configured to control a liquid crystal of the liquid crystal layer to transmit light or not to transmit light.

The electronic device 100 may implement an image shooting function through the ISP, the camera 193, the video codec, the GPU, the display 194, the application processor, and the like.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

It may be understood that the structure illustrated in this application does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by using hardware, software, or a combination of software and hardware.

A software system of the electronic device 100 may use a layered architecture, an event-driven architecture, a microkemel architecture, a micro service architecture, or a cloud architecture. In this application, an example of a software structure of the electronic device 100 is described by using an example of OpenHarmony with a layered architecture. A type of an operating system of the electronic device is not limited in this application,

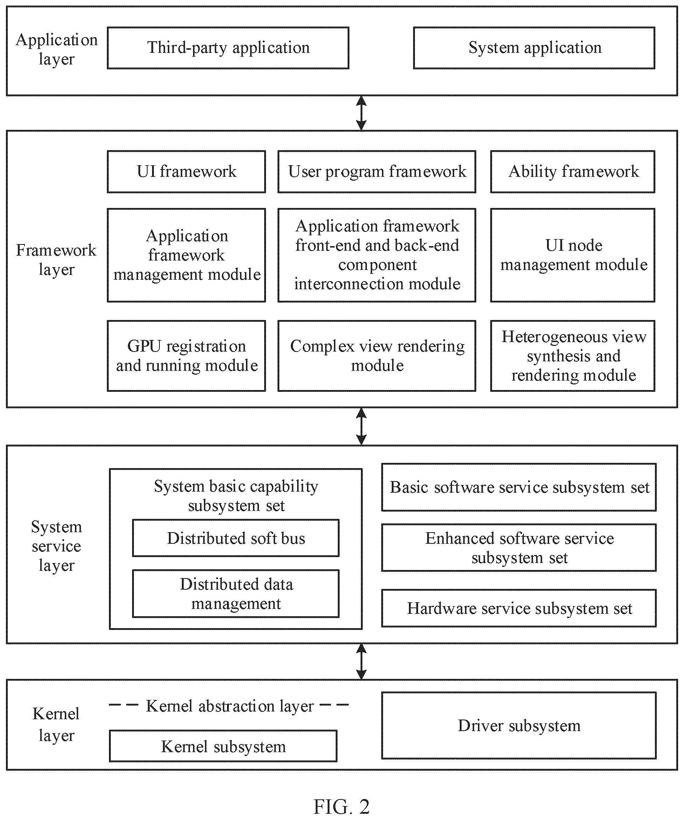

FIG. 2 is a block diagram of a software structure of an electronic device applicable to a user interface display method according to an embodiment of this application.

As shown in FIG. 2, a software system of the electronic device 100 is divided into several layers by using a layered architecture, and each layer has a clear role and task. The layers communicate with each other through a software interface. In some embodiments, OpenHarmony is divided into four layers: an application layer, a framework layer, a system service layer, and a kernel layer from top to bottom. In some embodiments, the electronic device 100 further includes hardware such as a GPU, a CPU, and a display.

The application layer may include a series of application packages. As shown in FIG. 2, the application layer may include a system application and a third-party application. The system application may be understood as some built-in applications of the system, for example, applications such as Camera, Gallery, Calendar, Phone, Maps, Bluetooth, Videos, and Music. The third-party application may be understood as a non-system application, and may be downloaded and installed from an application store or the like.

The framework layer may include a UI framework, a user program framework, an ability (Ability) framework, an application framework management module, an application framework front-end and back-end interconnection module, a UI node management module, a GPU registration and running module, a complex view render module, and a heterogeneous view synthesis and render module. The framework layer provides multi-language user program frameworks and ability frameworks such as C language, C++ language, and JavaScript (JS) language for OpenHarmony applications, and multi-language framework application interfaces (application Program Interface, API) for various software and hardware services. In addition, the framework layer provides multi-language UI frameworks such as C language, C++ language, and JS language for OpenHarmony devices. APIs supported by different devices are related to a degree of componentization of a system.

In embodiments of this application, the application framework management module provides the electronic device with capabilities such as JS engine initialization, life cycle management, event distribution, UI component loading, routing jump, and data binding.

The application framework front-end and back-end interconnection module may provide the electronic device with capabilities such as definition of an application framework UI component, components, styles, and attributes of the JS layer, and interconnection between back-end components.

The UI node management module may provide the electronic device with capabilities of creating and managing a component node (which may also be referred to as a view node), an element node, and a render node of a complex view, and calculating a layout and generating a render instruction of a UI component. The component node may correspond to one or more items of information such as an attribute, an event, and a method of a bound component. The element node is an instance of an element tree, and is configured to connect a component node and a render node. The element node is in a one-to-one correspondence with the component node. The element node may be configured to: correspondingly update, after data of the component node changes, changed data of the component node to a corresponding node in the render node tree, to implement rebinding of a node and data in the render tree, and render a changed user interface based on the updated render node tree. The render node may include nodes that can be displayed on a user interface, and the render node tree is bound with information about these nodes. A drawing instruction may be generated based on the render node tree, and the user interface is rendered and displayed based on the drawing instruction.

The GPU registration and running module may provide the electronic device with capabilities such as registering a drawing callback with a GPU Render thread and running a GPU drawing task.

The complex view render module may provide the electronic device with capabilities of generating a render instruction of a complex view and updating the render instruction of the complex view, and sending the render instruction of the complex view to a GPU thread.

The heterogeneous view synthesis and render module may provide the electronic device with capabilities of synthesizing a drawing instruction of a complex view and a drawing instruction of a native view into a target drawing instruction, and sending the target drawing instruction for display.

The system service layer may include a system basic capability subsystem set, a basic software service subsystem set, an enhanced software service subsystem set, and a hardware service subsystem set. The system service layer is a core capability set of OpenHarmony and provides services for applications through a framework layer.

The system basic capability subsystem set may include subsystems such as a distributed soft bus, distributed data management, distributed task scheduling, ark multi-language runtime, a common basic library, multimode input, graphics, security, and artificial intelligence (artificial intelligence, AI). The system basic capability subsystem set may provide basic capabilities for operations such as running, scheduling, and migration of a distributed application on various OpenHarmony devices.

The ark runtime can provide multi-language runtime and basic system class libraries for C language, C++ language, and JS language, and also provides runtime for Java programs that are staticized by using an ark compiler (that is, a part developed by using the Java language at the application layer or the framework layer).

The basic software service subsystem set includes subsystems such as an event notification, phone, and multimedia, and provides common and universal software services for OpenHarmony.

The enhanced software service subsystem set may include subsystems such as a dedicated service of Huawei Vision, a dedicated service of wearables, and a dedicated service of the internet of things (internet of things, IoT), and may provide differentiated capability enhanced software services for different devices for OpenHarmony.

The hardware service subsystem set may include subsystems such as a location service, biometric feature recognition, a wearable dedicated hardware service, and an IoT dedicated hardware service, and may provide a hardware service for OpenHarmony.

It should be noted that, based on deployment environments of different device forms, the basic software service subsystem set, the enhanced software service subsystem set, and the hardware service subsystem set may be tailored based on a subsystem granularity, and each subsystem may be tailored based on a function granularity. This is not limited in embodiments of this application.

The kernel layer may include a kernel subsystem and a driver subsystem. OpenHarmony adopts a multi-kernel design. Based on the kernel subsystem, OpenHarmony supports selection of an appropriate OS kernel for different resource-limited devices. The kernel abstraction layer (kernel abstraction layer, KAL) shields differences between a plurality of kernels and provides basic kernel capabilities for an upper layer, including process/thread management, memory management, file system management, network management, and peripheral management. A driver framework in the driver subsystem is a basis of an OpenHarmony hardware ecosystem, and the driver framework provides a unified peripheral access capability and a driver development and management framework.

In embodiments of this application, as shown in FIG. 2, the electronic device may include the GPU registration and running module, the complex view render module, and the heterogeneous view synthesis and render module, so that the electronic device has a capability of implementing the user interface display method provided in this application.

It should be understood that FIG. 1 and FIG. 2 are merely examples, and should not impose any limitation on embodiments of this application.

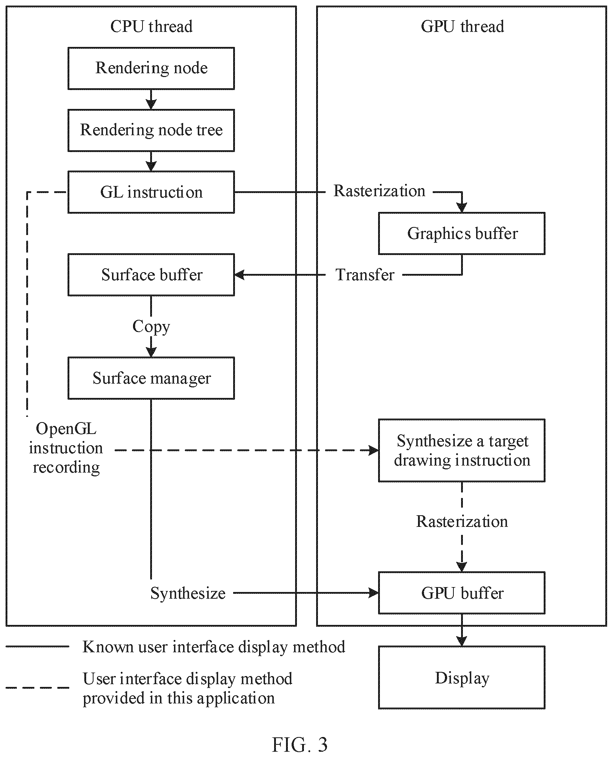

FIG. 3 is a diagram of comparison between a procedure of a known user interface display method and a procedure of a user interface display method according to this application.

As shown in FIG. 3, after code of a complex view is parsed, a render node corresponding to the complex view is created, a render node tree is generated based on the render node, and a GL instruction may be generated based on the render node tree. Rasterization is performed based on the GL instruction, to generate texture data corresponding to the complex view. The generated texture data is stored in a graphics buffer (graphics buffer), and then the texture data is transferred to a surface buffer (surface buffer). Then a surface manager may copy the texture data from the surface buffer, mix (or synthesize) the texture data with a render node tree corresponding to a native view, store the texture data in a GPU buffer (GPU buffer), and then send the texture data to a display for display.

In the foregoing process, the texture data corresponding to the complex view is stored in a buffer for a plurality of times, and each time the texture data is stored in the buffer is equivalent to a render operation. In this case, rendering is performed for a plurality of times in this process, and a plurality of copy or upload operations need to be performed between a CPU and a GPU. The copy and upload operations are time-consuming. As a result, display performance of a user interface is low.

In some other known user interface display methods, a native view and a complex view are separately rendered, drawn, and displayed independently, and a layer of the complex view is superimposed at a layer of the native view to display a UI. The displayed native view and the complex view are not at a same layer. Consequently, a problem of pop-up box blocking and asynchronous animation exists, and a transition animation of the user interface is not supported.

In view of the foregoing problems, embodiments of this application provide a user interface display method and a related apparatus, to interrupt a known display process of a user interface. This method neither directly performs rasterization based on a GL instruction corresponding to a complex view, nor uses a manner of superimposing a layer of a complex view and a layer of a native view. However, this method synthesizes a drawing instruction of the complex view and a drawing instruction of the native view to obtain a target drawing instruction, where the native view and the complex view may be drawn at a same layer based on the target drawing instruction. Therefore, a problem of low display performance caused by a plurality of times of renderings can be effectively avoided, and a problem of pop-up box blocking and asynchronous animation can be resolved, so that a transition animation of a user interface can be supported.

As shown in FIG. 3, in the user interface display method provided in embodiments of this application, a known display procedure of a user interface is interrupted, and rasterization is not directly performed based on a GL instruction corresponding to a complex view. However, a drawing instruction of a complex view is generated based on a GL instruction corresponding to the complex view by using an OpenGL instruction recording technology. Then, the drawing instruction of the complex view and a drawing instruction of a native view are synthesized, to obtain a target drawing instruction, and rasterization is performed based on the target drawing instruction to generate corresponding texture data. A UI is displayed based on the texture data.

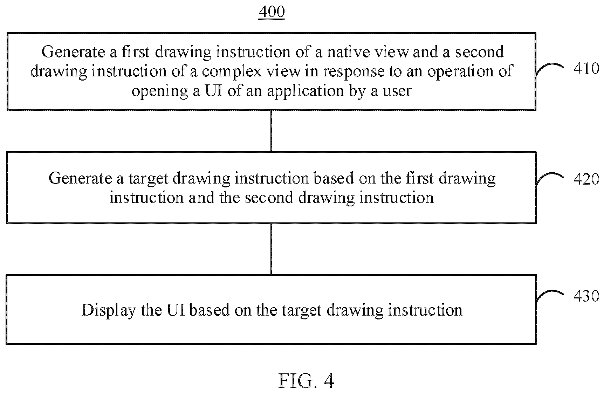

FIG. 4 is a schematic flowchart of a user interface display method according to an embodiment of this application.

As shown in FIG. 4, the method 400 may include step 410 to step 430. The steps of the method 400 may be performed by an electronic device, or the method 400 may be performed by a component (for example, a chip or a chip system) configured in an electronic device, or may be implemented by a logical module or software that can implement all or some functions of an electronic device. This is not limited in embodiments of this application. The electronic device may have the structure shown in FIG. 1 and/or the structure shown in FIG. 2. This is not limited in embodiments of this application. The following describes the steps in FIG. 4 in detail.

Step 410: Generate a first drawing instruction of a native view and a second drawing instruction of a complex view in response to an operation of starting a UI of an application by a user.

The UI of the application started by the user includes the native view and the complex view.

As described above, the complex view is a view that has an independent life cycle, an independent routing management mechanism, an independent event processing mechanism, an independent UI development framework, and the like. The native view comes from an application UI development framework of an operating system of the electronic device, and the complex view is not a view from the application UI development framework of the operating system of the electronic device. In other words, the native view is obtained based on the application UI development framework of the operating system of the electronic device, and the complex view is a view other than a view provided by the application UI development framework of the operating system of the electronic device, for example, a map view other than the application UI development framework of the operating system of the electronic device. The native view does not have an independent life cycle, an independent routing management mechanism, an independent event processing mechanism, and the like. The complex view has the independent life cycle, the independent routing management mechanism, the independent event processing mechanism, an independent UI open framework, and the like. By way of example and not limitation, Flutter or Vant may be two examples of the application UI development framework of the operating system of the electronic device. The native view may be, for example, a view from Flutter or Vant, and the complex view may be, for example, a webview.

For example, the user may perform an operation on the electronic device, for example, starting the UI of the application on the electronic device, where the UI includes the native view and the complex view. The electronic device may generate the first drawing instruction of the native view and the second drawing instruction of the complex view in response to the operation of starting the UI by the user.

By way of example and not limitation, more specifically, the electronic device may parse, based on the application framework management module shown in FIG. 2, UI code of the native view by using a tool chain of the cross-platform application UI development framework, to generate an executable file (for example, a JS Bundle, which includes an instruction stream for how to construct a component interface).

The electronic device may parse, based on the application framework front-end and back-end interconnection module shown in FIG. 2, each instruction stream in the executable file, generate, through a JS-to-C++ cross-language interface, a component node at a C++ layer corresponding to the native view, and store a style attribute (for example, an address for accessing a web page) of the component node in the component node.

The electronic device may create, based on the UI node management module shown in FIG. 2, an element node and a render node that correspond to the component node. As described above, the element node is a bridge between the component node and the render node, and the element node may be responsible for local update when data changes. The render node may store display information corresponding to the component node, and the render node maintains information that needs to be used by the render node of the UI development framework of the application. For example, the information includes a layout and a drawing instruction.

In addition, the electronic device may calculate a layout of the native view based on the UI node management module shown in FIG. 2 and a UI attribute style, then generate the first drawing instruction of the native view in a GPU thread, and store the first drawing instruction in a drawing instruction queue. It may be understood that the drawing instruction queue in which the first drawing instruction is stored may be a preset drawing instruction queue (namely, a default queue). This is not limited in embodiments of this application.

In a process in which the electronic device generates the first drawing instruction, the electronic device may create, based on the UI node management module shown in FIG. 2, an area corresponding to the complex view, may load, based on the complex view render module shown in FIG. 2, a web page link that corresponds to the complex view and that is transparently transmitted by the native view, obtain UI code of the complex view based on the web page link, parse each node of the complex view, calculate a layout, and finally generate the second drawing instruction (for example, the second drawing instruction may include drawing instructions such as drawText, drawImage, and drawLine) of the complex view.

As shown in FIG. 3, the first drawing instruction and the second drawing instruction may be generated by using an OpenGL instruction recording technology. This is not limited in embodiments of this application.

Step 420: Generate a target drawing instruction based on the first drawing instruction and the second drawing instruction.

After generating the first drawing instruction and the second drawing instruction, the electronic device may generate the target drawing instruction based on the first drawing instruction and the second drawing instruction. The target drawing instruction is used to draw the native view and the complex view at a same layer.

For example, the electronic device may synthesize the first drawing instruction and the second drawing instruction into the target drawing instruction based on the heterogeneous view synthesis and render module shown in FIG. 2.

Optionally, before the target drawing instruction is generated, the first drawing instruction and the second drawing instruction are stored in a same drawing instruction queue.

For ease of description, in this embodiment of this application, the drawing instruction queue used to store the first drawing instruction is denoted as a target drawing instruction queue. As described above, the drawing instruction queue in which the first drawing instruction is stored may be a preset drawing instruction queue (namely, a default queue), that is, the target drawing instruction queue may be a predefined drawing instruction queue.

In a possible implementation, the method 400 may further include: The electronic device registers a render callback with a graphics processing unit render thread of the UI development framework, where the render callback is used to obtain a drawing instruction of a view; and places, based on the render callback, the second drawing instruction in the target drawing instruction queue when the second drawing instruction is detected, where the target drawing instruction queue is a queue used to store the first drawing instruction.

For example, the electronic device may register the render callback with the GPU render thread of the UI development framework based on the GPU registration and running module shown in FIG. 2. Once the second drawing instruction is generated, the render callback is triggered, and the second drawing instruction is distributed to the target drawing instruction queue. The target drawing instruction queue may be, for example, a drawing instruction queue in a GPU.

It may be understood that the first drawing instruction may be generated earlier than the second drawing instruction, or the second drawing instruction may be generated earlier than the first drawing instruction, or the first drawing instruction and the second drawing instruction may be generated simultaneously. A sequence of generating the first drawing instruction and the second drawing instruction is not limited in embodiments of this application.

In an example, the first drawing instruction is generated earlier than the second drawing instruction, and the electronic device may first store, based on the render callback, the first drawing instruction in the target drawing instruction queue after detecting that the first drawing instruction is generated. After the second drawing instruction is generated, the electronic device may then store the second drawing instruction in the target drawing instruction queue.

In another example, the second drawing instruction is generated earlier than the first drawing instruction, and after the second drawing instruction is generated, the electronic device may first store the second drawing instruction in the target drawing instruction queue. The electronic device may then store, based on the render callback, the first drawing instruction in the target drawing instruction queue after detecting that the first drawing instruction is generated.

In still another example, the first drawing instruction and the second drawing instruction are generated simultaneously, and the electronic device may store, based on the render callback, the first drawing instruction in the target drawing instruction queue after detecting that the first drawing instruction is generated. After the second drawing instruction is generated, the electronic device may store the second drawing instruction in the target drawing instruction queue.

Step 430: Display the UI based on the target drawing instruction.

After the target drawing instruction is generated, the electronic device may perform rendering and drawing based on the target drawing instruction. More specifically, the electronic device may draw the native view and the complex view at the same layer based on the target drawing instruction, and finally display, on a display, the UI including the native view and the complex view.

In a possible implementation, the displaying the UI based on the target drawing instruction includes: generating texture data of the UI based on the target drawing instruction; and displaying the UI based on the texture data.

For example, the electronic device may trigger, when a Vsync signal arrives, rasterization based on the heterogeneous view synthesis and render module shown in FIG. 2. In other words, rasterization is performed based on the target drawing instruction, to generate the texture data of the UI. Then, a render engine may output the texture data to a frame buffer (namely, a GPU buffer), and the display may read the texture data from the frame buffer, and finally display the UI including the native view and the complex view.

As described above, a drawing instruction stored in the render node is equivalent to an "intermediate language" between a drawing operation of a view and a GL instruction, and records all information required for drawing the view. Subsequently, content drawing can be completed only through replay (replay). In this way, if the view is not changed or only a part of the view is changed, the drawing instruction may be reused or modified. In other words, the electronic device may update the first drawing instruction. As further described above, the complex view render module shown in FIG. 3 may provide the electronic device with a capability of updating the drawing instruction of the complex view. In other words, the electronic device may update the second drawing instruction. In other words, the electronic device may update the first drawing instruction and/or the second drawing instruction.

For example, the user may perform an operation on the UI, and the operation of the user may cause a corresponding change in display content of the UI. When the user performs the operation on the UI, the electronic device may determine, based on a location at which the user performs the operation on the UI, whether the location is in a display area of the native view or in a display area of the complex view. When determining that the location is in the display area of the native view, the electronic device may update the first drawing instruction. When determining that the location is in the display area of the complex view, the electronic device may update the second drawing instruction. When determining that the location is in the display area of the native view and the display area of the complex view, the electronic device may update the first drawing instruction and the second drawing instruction.

Optionally, after the displaying the UI based on the target drawing instruction, the method 400 may further include: generating a third drawing instruction in response to an operation of the user on the UI, where the third drawing instruction is a drawing instruction obtained by updating the second drawing instruction; generating an updated target drawing instruction based on the first drawing instruction and the third drawing instruction; and displaying the UI based on the updated target drawing instruction.

For example, in response to the operation of the user on the UI, when the electronic device determines that a location of the operation of the user on the UI is in the display area of the complex view, the electronic device may update the second drawing instruction to obtain the third drawing instruction, further generate the updated target drawing instruction based on the first drawing instruction and the third drawing instruction, and then display the UI based on the updated target drawing instruction.

Optionally, after the displaying the UI based on the target drawing instruction, the method 400 may further include: generating a fourth drawing instruction in response to an operation of the user on the UI, where the fourth drawing instruction is a drawing instruction obtained by updating the first drawing instruction; generating an updated target drawing instruction based on the second drawing instruction and the fourth drawing instruction; and displaying the UI based on the updated target drawing instruction.

For example, in response to the operation of the user on the UI, when the electronic device determines that a location of the operation of the user on the UI is in the display area of the native view, the electronic device may update the first drawing instruction to obtain the fourth drawing instruction, further generate the updated target drawing instruction based on the fourth drawing instruction and the second drawing instruction, and then display the UI based on the updated target drawing instruction.

Optionally, after the displaying the UI based on the target drawing instruction, the method 400 may further include: obtaining a third drawing instruction and a fourth drawing instruction in response to an operation of the user on the UI, where the third drawing instruction is a drawing instruction obtained by updating the second drawing instruction, and the fourth drawing instruction is a drawing instruction obtained by updating the first drawing instruction; generating an updated target drawing instruction based on the third drawing instruction and the fourth drawing instruction; and displaying the UI based on the updated target drawing instruction.

For example, in response to the operation of the user on the UI, when the electronic device determines that a location of the operation of the user on the UI is in the display area of the native view and the display area of the complex view, the electronic device may update the first drawing instruction to obtain the fourth drawing instruction, and update the second drawing instruction to obtain the third drawing instruction, further generate the updated target drawing instruction based on the third drawing instruction and the fourth drawing instruction, and then display the UI based on the updated target drawing instruction.

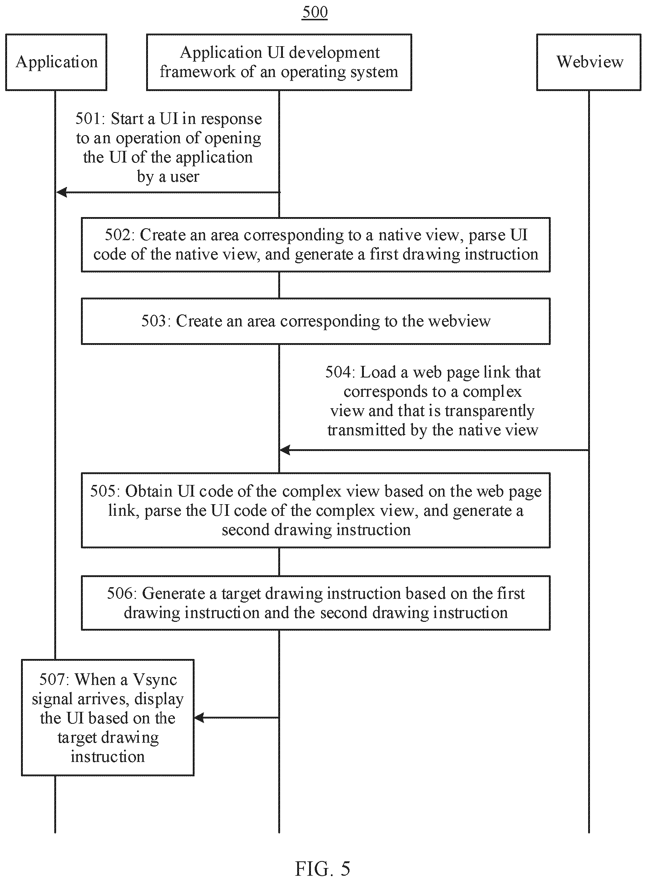

FIG. 5 is another schematic flowchart of a user interface display method according to an embodiment of this application.

In FIG. 5, a webview is used as an example of a complex view to describe the user interface display method provided in this application. As shown in FIG. 5, the method 500 may include step 501 to step 507. The steps of the method 500 may be performed by an electronic device, or the method 500 may be performed by a component (for example, a chip or a chip system) configured in an electronic device, or may be implemented by a logical module or software that can implement all or some functions of an electronic device. This is not limited in embodiments of this application. The electronic device may have the structure shown in FIG. 1 and/or the structure shown in FIG. 2. This is not limited in embodiments of this application. The following describes the steps in FIG. 5 in detail.

It should be further noted that the method 500 shown in FIG. 5 is a capability provided by an operating system of the electronic device, and may be denoted as a platform capability for ease of description. The platform capability may include capabilities provided for the electronic device by the application framework management module, the application framework front-end and back-end interconnection module, the UI node management module, the GPU registration and running module, the complex view render module, and the heterogeneous view synthesis and render module that are shown in FIG. 3.

Step 501: An application on the electronic device starts a UI in response to an operation of starting the UI of the application by a user.

Starting the UI is to run code related to the UI.

Step 502: An application UI development framework of the operating system of the electronic device creates an area corresponding to a native view, parses UI code of the native view, and generates a first drawing instruction.

For example, based on the starting of the UI by the application, the application UI development framework of the operating system of the electronic device may determine, based on the starting of the UI by the application, the UI code of the native view on the UI, create the area corresponding to the native view, parse the UI code of the native view, and generate the first drawing instruction. For detailed descriptions of generating the first drawing instruction, refer to related descriptions in the method 400. For brevity, details are not described herein again.

Step 503: The application UI development framework of the operating system of the electronic device creates an area corresponding to a complex view.

For example, based on the starting of the UI by the application, the application UI development framework of the electronic device may determine, based on the starting of the UI by the application, UI code of the complex view on the UI, and create the area corresponding to the complex view.

Step 504: The application UI development framework of the operating system of the electronic device loads a web page link that corresponds to the complex view and that is transparently transmitted by the native view.

Step 505: The application UI development framework of the operating system of the electronic device obtains the UI code of the complex view based on the web page link, parses the UI code of the complex view, and generates a second drawing instruction.

For detailed descriptions of generating the second drawing instruction, refer to related descriptions in the method 400. For brevity, details are not described herein again.

Step 506: The application UI development framework of the operating system of the electronic device generates a target drawing instruction based on the first drawing instruction and the second drawing instruction.

For detailed descriptions of generating the target drawing instruction, refer to related descriptions in the method 400. For brevity, details are not described herein again.

Step 507: When a Vsync signal arrives, the application of the electronic device displays the UI based on the target drawing instruction.

After the target drawing instruction is generated, the electronic device may draw the native view and the complex view at a same layer based on the target drawing instruction, and finally display, on a display, the UI including the native view and the complex view.

It may be understood that the electronic device may periodically generate a Vsync signal. When the Vsync signal arrives, drawing and rendering are triggered, and the UI is displayed on the display. A period for generating the Vsync signal is related to a screen refresh rate.

As described above, the first drawing instruction may be generated earlier than the second drawing instruction, or the second drawing instruction may be generated earlier than the first drawing instruction, or the first drawing instruction and the second drawing instruction may be generated simultaneously. In other words, step 502 may be performed before step 503, or may be performed after step 505, or step 502 and step 503 to step 505 may be performed simultaneously. This is not limited in embodiments of this application.

For detailed descriptions of displaying the UI based on the target drawing instruction, refer to the method 400. For brevity, details are not described herein again.

Table 1 is a power consumption comparison table between a user interface display method provided in this application and a known user interface display method.

**Table 1**

| Sequence number | User interface display method provided in this application (Unit: kilobyte (Kilobyte, KB)) | Known user interface display method (Unit: KB) |
|---|---|---|
| 1 | 258288 | 354310 |
| 2 | 269546 | 336289 |
| 3 | 260996 | 326588 |
| 4 | 260856 | 320865 |
| 5 | 260932 | 325765 |
| 6 | 260028 | 327276 |
| 7 | 259586 | 323731 |
| 8 | 273120 | 330649 |
| 9 | 259955 | 324538 |
| 10 | 260678 | 329649 |
| Average | 262398.5 | 329966 |

As shown in Table 1, power consumption of the user interface display method provided in this application is reduced by about 20.5% (obtained by (329966-262398.5)/329966×100%) compared with power consumption of the known user interface display method.

Table 2 is a frame rate comparison table between a user interface display method provided in this application and a known user interface display method.

**Table 2**

| Sequence number | User interface display method provided in this application (Unit: hertz (Hertz, Hz)) | Known user interface display method (Unit: Hz) |
|---|---|---|
| 1 | 59.02 | 37.76 |
| 2 | 57.59 | 33.09 |
| 3 | 59.50 | 35.13 |
| 4 | 58.97 | 35.31 |
| 5 | 58.43 | 32.37 |
| 6 | 57.66 | 32.58 |
| 7 | 58.39 | 44.23 |
| 8 | 58.99 | 33.26 |
| 9 | 57.88 | 39.66 |
| 10 | 58.09 | 42.31 |
| Average | 58.45 | 36.57 |

As shown in Table 2, a frame rate of the user interface display method provided in this application is improved by about 59.8% (obtained from (58.45-36.57)/36.57) compared with a frame rate of the known user interface display method.

Based on the foregoing solution, the drawing instruction of the complex view and the drawing instruction of the native view are synthesized to obtain the target drawing instruction, and the native view and the complex view may be drawn at the same layer based on the target drawing instruction. Rasterization is not directly performed based on a GL instruction corresponding to the complex view, and a manner of superimposing a layer of the complex view and a layer of the native view are not used for display. Therefore, the drawing instruction of the complex view does not need an independent offline buffer, so that memory space is saved. In addition, the complex view needs to be rendered together with the native view only once, so that problems of high power consumption and low display performance caused by a plurality of times of rendering can be effectively avoided, for example, power consumption is reduced, and a frame rate is optimized. In addition, because the native view and the complex view are drawn at the same layer, problems of pop-up box blocking and asynchronous animation can be resolved, and a transition animation of the user interface can be supported.

An embodiment of this application further provides an electronic device. The electronic device includes a corresponding module configured to perform the steps performed by the electronic device in the method 400 or the method 500. The electronic device may be configured to implement functions of the electronic device in the method 400 or the method 500. The module included in the electronic device may be implemented by using software and/or hardware.

An embodiment of this application further provides an electronic device. The electronic device includes a memory and a processor. The memory is configured to store a computer program, and the processor is configured to invoke and execute the computer program, so that the electronic device is enabled to perform the steps performed by the electronic device in the method 400 or the method 500.

This application further provides a chip system. The chip system includes at least one processor, configured to implement functions in the steps performed by the electronic device in the method 400 or the method 500.

In a possible design, the chip system further includes a memory. The memory is configured to store program instructions and data. The memory is located inside or outside the processor.

The chip system may include a chip, or may include a chip and another discrete component.

An embodiment of this application further provides a computer-readable storage medium. The computer-readable storage medium stores a computer program. When the computer program is executed by a computer, the computer is enabled to perform the steps performed by the electronic device in the method 400 or the method 500.

An embodiment of this application further provides a computer program product, including a computer program. When the computer program is run, a computer is enabled to perform the steps performed by the electronic device in the method 400 or the method 500.

It should be understood that the processor in embodiments of this application may be an integrated circuit chip, and has a signal processing capability. In an implementation process, steps in the foregoing method embodiments may be completed by using an integrated logic circuit of hardware in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps of the foregoing method in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory of the systems and methods described in this specification includes but is not limited to these and any other memories of appropriate types.

Terms such as "unit" and "module" used in this specification may indicate computer-related entities, hardware, firmware, combinations of hardware and software, software, or software being executed.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the apparatus embodiment described above is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of the embodiments.

In addition, functional modules in this application may be integrated into one processing module, or each of the modules may exist alone physically, or two or more units are integrated into one module.

In the foregoing embodiments, all or some of the functions of the functional modules may be implemented by using software, hardware, firmware, or any combination thereof. When software is used to implement the embodiments, the embodiments may be implemented entirely or partially in a form of a computer program product. The computer program product includes one or more computer instructions (programs). When the computer program instructions (programs) are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), or an optical medium (for example, a digital versatile disc (digital video disc, DVD)), a semiconductor medium (for example, a solid-state disk (solid state disk, SSD)), or the like.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A user interface display method, applied to an electronic device, wherein the method comprises:
generating a first drawing instruction of a native view and a second drawing instruction of a complex view in response to an operation of starting a user interface UI of an application by a user, wherein the UI comprises the native view and the complex view, the native view comes from an application UI development framework of an operating system of the electronic device, and the complex view is not a view from the application UI development framework;
generating a target drawing instruction based on the first drawing instruction and the second drawing instruction, wherein the target drawing instruction is used to draw the native view and the complex view at a same layer; and
displaying the UI based on the target drawing instruction.

2. The method according to claim 1, wherein before the target drawing instruction is generated, the first drawing instruction and the second drawing instruction are stored in a same drawing instruction queue.

3. The method according to claim 1 or 2, wherein the method further comprises:
registering a render callback with a graphics processing unit render thread of the UI development framework, wherein the render callback is used to obtain the second drawing instruction; and
placing, based on the render callback, the second drawing instruction in a target drawing instruction queue when the second drawing instruction is detected, wherein the target drawing instruction queue is a queue used to store the first drawing instruction.

4. The method according to any one of claims 1 to 3, wherein after the displaying the UI based on the target drawing instruction, the method further comprises:
generating a third drawing instruction in response to an operation of the user on the UI, wherein the third drawing instruction is a drawing instruction obtained by updating the second drawing instruction;
generating an updated target drawing instruction based on the first drawing instruction and the third drawing instruction; and
displaying the UI based on the updated target drawing instruction.

5. The method according to any one of claims 1 to 3, wherein after the displaying the UI based on the target drawing instruction, the method further comprises:
generating a fourth drawing instruction in response to an operation of the user on the UI, wherein the fourth drawing instruction is a drawing instruction obtained by updating the first drawing instruction;
generating an updated target drawing instruction based on the second drawing instruction and the fourth drawing instruction; and
displaying the UI based on the updated target drawing instruction.

6. The method according to any one of claims 1 to 3, wherein after the displaying the UI based on the target drawing instruction, the method further comprises:
obtaining a third drawing instruction and a fourth drawing instruction in response to an operation of the user on the UI, wherein the third drawing instruction is a drawing instruction obtained by updating the second drawing instruction, and the fourth drawing instruction is a drawing instruction obtained by updating the first drawing instruction;
generating an updated target drawing instruction based on the third drawing instruction and the fourth drawing instruction; and
displaying the UI based on the updated target drawing instruction.

7. The method according to any one of claims 1 to 6, wherein the complex view has an independent life cycle, an independent routing management mechanism, an independent event processing mechanism, and an independent UI development framework.

8. The method according to any one of claims 1 to 7, wherein the displaying the UI based on the target drawing instruction comprises:
generating texture data of the UI based on the target drawing instruction; and
displaying the UI based on the texture data.

9. An electronic device, comprising a processor and a memory, wherein
the memory is configured to store a computer program; and
the processor is configured to invoke the computer program, to enable the electronic device to perform the method according to any one of claims 1 to 8.

10. A computer-readable storage medium, wherein the computer-readable storage medium stores a computer program, and when the computer program is executed, a computer is enabled to perform the method according to any one of claims 1 to 8.

11. A computer program product, comprising a computer program, wherein when the computer program is run, a computer is enabled to perform the method according to any one of claims 1 to 8.

12. A program product, wherein the program product comprises a computer program, the computer program is stored in a readable storage medium, at least one processor of a communication apparatus reads the computer program from the readable storage medium, and the at least one processor executes the computer program, to enable the communication apparatus to perform the method according to any one of claims 1 to 8.
